# EUROPÄISCHE PATENTANMELDUNG

(11) **EP 0 923 220 A2**
(43) Veröffentlichungstag der Anmeldung: **16.06.1999**
(21) Anmeldenummer: 98123612.8
(22) Anmeldetag: 09.12.1998
(51) Int. Cl.: H04M 3/42, H04M 1/00

(54) **Verfahren zur Verwaltung teilnehmerindividueller Daten eines Telekommunikationsendgerätes**

(30) Priorität: 11.12.1997 DE 19755012
(71) Anmelder: ROBERT BOSCH GMBH, 70442 Stuttgart (DE)
(72) Erfinder: Pfeil, Thomas, 65558 Holzheim (DE); Diehl, Joachim, 35510 Butzbach (DE); Winter, Siegfried, 65795 Hattersheim (DE)

(57) **Zusammenfassung**

Es wird ein Verfahren zur Verwaltung teilnehmerindividueller Daten eines Telekommunikationsendgerätes (1, 5, 10) vorgeschlagen, das eine Sicherung dieser Daten unabhängig vom Telekommunikationsendgerät (1, 5, 10) ermöglicht. Dabei werden die teilnehmerindividuellen Daten in einem Speicher (20) einer mit dem Telekommunikationsendgerät (1, 5, 10) verbundenen Zentrale (15) abgelegt. Die teilnehmerindividuellen Daten werden nach einer Aufforderung vom Speicher (20) der Zentrale (15) an mindestens ein berechtigtes und an die Zentrale (15) angeschlossenes Telekommunikationsendgerät (1, 5, 10) übertragen.

## Beschreibung

### Stand der Technik

Die Erfindung geht von einem Verfahren zur Verwaltung teilnehmerindividueller Daten eines Telekommunikationsendgerätes nach der Gattung des Hauptanspruchs aus.

Es sind bereits Telefonendgeräte bekannt, die über einen Kurzwahlspeicher verfügen, in dem teilnehmerindividuelle Kurzwahlziele abgespeichert und bei Bedarf aufgerufen werden können.

### Vorteile der Erfindung

Das erfindungsgemäße Verfahren mit den Merkmalen des Hauptanspruchs hat demgegenüber den Vorteil, daß die teilnehmerindividuellen Daten in einem Speicher einer mit dem Telekommunikationsendgerät verbundenen Zentrale zum Anschluß mehrerer Telekommunikationsendgeräte, insbesondere einer Nebenstellenanlage, abgelegt werden und daß die teilnehmerindividuellen Daten nach einer Aufforderung vom Speicher der Zentrale an mindestens ein berechtigtes und an die Zentrale angeschlossenes Telekommunikationsendgerät übertragen werden. Auf diese Weise läßt sich Speicherplatz beim Telekommunikationsendgerät einsparen, so daß dieses mit weniger Aufwand und Kosten hergestellt werden kann. Die Abspeicherung teilnehmerindividueller Daten im Speicher der Zentrale kann auch für Telekommunikationsendgeräte mit entsprechend vorgesehenem eigenen Speicher durchgeführt werden, um eine Sicherheitskopie der teilnehmerindividuellen Daten zu realisieren. Bei Betriebsstörungen oder Datenverlust im Telekommunikationsendgerät können dann die in der Zentrale gesicherten Daten dem Telekommunikationsendgerät zur Verfügung gestellt werden. Weiterhin kann ein Benutzer an einem beliebigen, an die Zentrale angeschlossenen Telekommunikationsendgerät über die ihm zugeordneten teilnehmerindividuellen Daten verfügen, wenn er über eine Berechtigung verfügt, so daß er bei Verwendung verschiedener an die Zentrale angeschlossener Telekomuunikationsendgeräte nicht jedesmal aufs Neue seine teilnehmerindividuellen Daten eingeben oder programmieren muß. Auf diese Weise sind Umzüge von an eine Nebenstellenanlage angeschlossenen Teilnehmern innerhalb einer Firma möglich, ohne daß das Telekommunikationsendgerät des Teilnehmers bewegt werden muß. Der Teilnehmer behält trotzdem seine gewohnten teilnehmerindividuellen Einstellungen. Auch beim Austausch eines an die Zentrale angeschlossenen beispielsweise defekten Telekommunikationsendgerätes sind die teilnehmerindividuellen Daten aufgrund der Speicherung in der Zentrale nach wie vor verfügbar.

Ein weiterer Vorteil besteht darin, daß mehrere an die Zentrale angeschlossene Telekommunikationsendgeräte mit den gleichen teilnehmerindividuellen Daten von der Zentrale versorgt werden können, so daß beispielsweise eine Vorkonfigurierung dieser Telekommunikationsendgeräte mit spezifischen Standarddaten ohne großen Aufwand möglich ist, so daß die einzelnen Teilnehmer auf der Grundlage dieser Vorkonfigurierung an ihrem Telekommunikationsendgerät weitere teilnehmerindividuellen Daten eingeben oder programmieren können.

Weiterhin wird ein Zugriff unberechtigter, an die Zentrale angeschlossener Telekomuunikationsendgeräte auf die im Speicher der Zentrale abgespeicherten teilnehmerindividuellen Daten verhindert.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß die teilnehmerindividuellen Daten zwischen dem Telekommunikationsendgerät und der Zentrale zu einer vorgegebenen Zeit übertragen werden können. Auf diese Weise können verkehrsarme Zeiten ausgenutzt werden, so daß der Aufbau von Telekommunikationsverbindungen durch den Austausch der teilnehmerindividuellen Daten zwischen dem Telekommunikationsendgerät und der Zentrale nur unwesentlich beeinträchtigt wird.

Ein weiterer Vorteil besteht darin, daß die teilnehmerindividuellen Daten vom Telekommunikationsendgerät in vorgegebenen Zeitabständen an die Zentrale übertragen und dort im Speicher abgelegt werden. Auf diese Weise wird eine automatische Sicherung der teilnehmerindividuellen Daten in der Zentrale realisiert. Außerdem wird sichergestellt, daß die im Speicher der Zentrale abgespeicherten teilnehmerindividuellen Daten möglichst aktuell sind. Eine zwischenzeitliche Änderung der teilnehmerindividuellen Daten beispielsweise durch entsprechende Eingabe oder Programmierung durch den Benutzer am Telekommunikationsendgerät kann so erfaßt und im Speicher der Zentrale gespeichert werden. Bei Datenverlust am Telekommunikationsendgerät stehen dem Benutzer somit möglichst aktuelle teilnehmerindividuelle Daten im Speicher der Zentrale zur Verfügung.

Ein weiterer Vorteil besteht darin, daß teilnehmerindividuelle Daten verschlüsselt im Speicher der Zentrale abgelegt werden und nur an ein berechtigtes Telekommunikationsendgerät entschlüsselt übertragen werden. Auf diese Weise läßt sich der Datenschutz für die teilnehmerindividuellen Daten erheblich verbessern. Bei einem unberechtigten Zugriff auf den Speicher der Zentrale können dann die teilnehmerindividuellen Daten dennoch nicht ausgewertet werden.

Besonders vorteilhaft ist es, daß die Übertragung der teilnehmerindividuellen Daten zwischen dem Telekommunikationsendgerät und der Zentrale in mindestens einem Signalisierungsdatenkanal, vorzugsweise einem D-Kanal gemäß dem ISDN-Standard (Integrated Services Data Network), übertragen werden. Auf diese Weise wird durch die Übertragung der teilnehmerindividuellen Daten eine gleichzeitig stattfindende Nutzdatenübertragung, zum Beispiel in einem B-Kanal gemäß dem ISDN-Standard, beispielsweise bezüglich ihrer Datenrate nicht beeinträchtigt.

Ein weiterer Vorteil besteht darin, daß die Übertragung der teilnehmerindividuellen Daten zwischen dem Telekommunikationsendgerät und der Zentrale in mindestens einem Nutzdatenkanal, vorzugsweise einem B-Kanal gemäß dem ISDN-Standard, erfolgt. Auf diese Weise kann für die Übertragung der teilnehmerindividuellen Daten eine höhere Datenrate genutzt werden, so daß der entsprechende Datenaustausch schneller erfolgen kann. Dies ist besonders bei einer hohen Datenmenge von Vorteil.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild einer Zentrale mit angeschlossenen Telekommunikationsendgeräten, Figur 2 einen Ablaufplan für die Funktionsweise einer Steuerung der Zentrale bei der Speicherung teilnehmerindividuellen Daten und Figur 3 einen Ablaufplan für die Funktionsweise der Steuerung bei einem Datentransfer von der Zentrale zu einem Telekommunikationsendgerät.

### Beschreibung des Ausführungsbeispiels

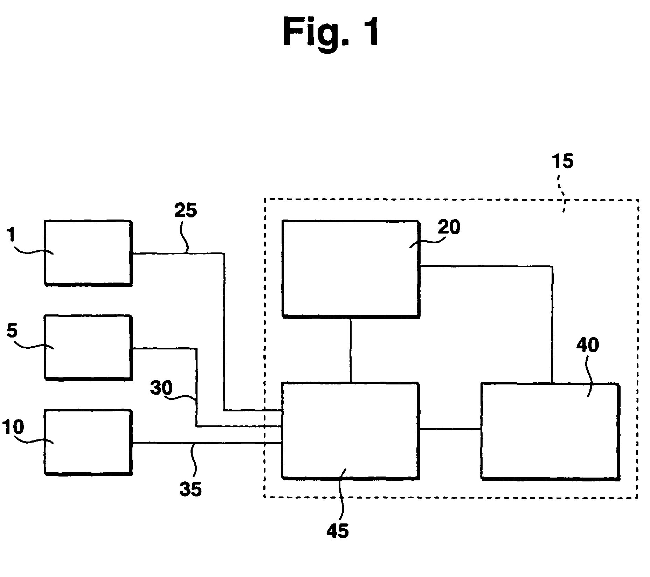

In Figur 1 kennzeichnet 15 eine als Nebenstellenanlage ausgebildete Zentrale. Die Zentrale umfaßt einen Speicher 20 und eine Schnittstelle 45, die miteinander verbunden und jeweils an eine Steuerung 40 angeschlossen sind. Die Steuerung 40 kann in die Nebenstellenanlage 15 integriert oder extern, beispielsweise in Form eines Personal Computers an die Nebenstellenanlage 15 angeschlossen sein. Im beschriebenen Ausführungsbeispiel ist die Steuerung 40 in die Nebenstellenanlage 15 integriert. Über einen ersten Datenkanal 25 ist ein erstes Telekommunikationsendgerät 1 an die Schnittstelle 45 angeschlossen. Über einem zweiten Datenkanal 30 ist ein zweites Telekommunikationsendgerät 5 an die Schnittstelle 45 angeschlossen. Über einen dritten Datenkanal 35 ist ein drittes Telekommunikationsendgerät 10 an die Schnittstelle 45 angeschlossen.

In der Schnittstelle 45 können Daten von den Telekommunikationsendgeräten 1, 5, 10 empfangen werden.

Ebenso können von der Schnittstelle 45 Daten an die Telekomnunikationsendgeräte 1, 5, 10 gesendet werden. Der Speicher 20 kann als schreib- und lesbarer nichtflüchtiger Massenspeicher ausgebildet sein.

An den Telekommunikationsendgeräten 1, 5, 10 können teilnehmerindividuelle Daten eingegeben oder programmiert werden. Teilnehmerindividuelle Daten können beispielsweise Kurzwahlziele, Telefonbuchspeichereinträge, Tastaturbelegungen, das heißt die individuelle Belegung von Tasten mit aktivierbaren Leistungsmerkmalen, Berechtigungen des Teilnehmers, das heißt Festlegung der vom Teilnehmer benutzbaren Leistungsmerkmale, Display-Grundeinstellungen, zum Beispiel die Anzeige der eigenen Telefonnummer, Sprache der Anzeige oder dergleichen sein. So kann beispielsweise an jedem der Telekommunikationsendgeräte 1, 5, 10 jeweils über eine in Figur 1 nicht dargestellte Eingabeeinheit teilnehmerindividuell eine Bedienoberfläche programmiert werden. Die Bedienoberfläche kann dabei in einem in Figur 1 nicht dargestellten Speicher des jeweiligen Telekommunikationsendgerätes 1, 5, 10 abgespeichert werden. Zusätzlich oder alternativ kann dieser Speicher auch als Telefonbuchspeicher verwendet werden und teilnehmerindividuelle Telefonbucheinträge umfassen. Werden Speicherinhalte des Speichers des jeweiligen Telekommunikationsendgerätes 1, 5, 10 bewußt oder aus Versehen gelöscht, so müßten die entsprechenden Daten bei Bedarf erneut am jeweiligen Telekommunikationsendgerät 1, 5, 10 eingegeben werden. Dies stellt je nach Datenmenge einen entsprechenden Aufwand dar. Dieser Aufwand kann entfallen, wenn im Speicher 20 der Zentrale 15 eine Sicherheitskopie der teilnehmerindividuellen Daten der Telekommunikationsendgeräte 1, 5, 10 vorliegt. Über die Datenkanäle 25, 30, 35 können dann bei Bedarf die teilnehmerindividuellen Daten aus dem Speicher 20 der Zentrale 15 an die entsprechenden Telekommunikationsendgeräte 1, 5, 10 übertragen werden.

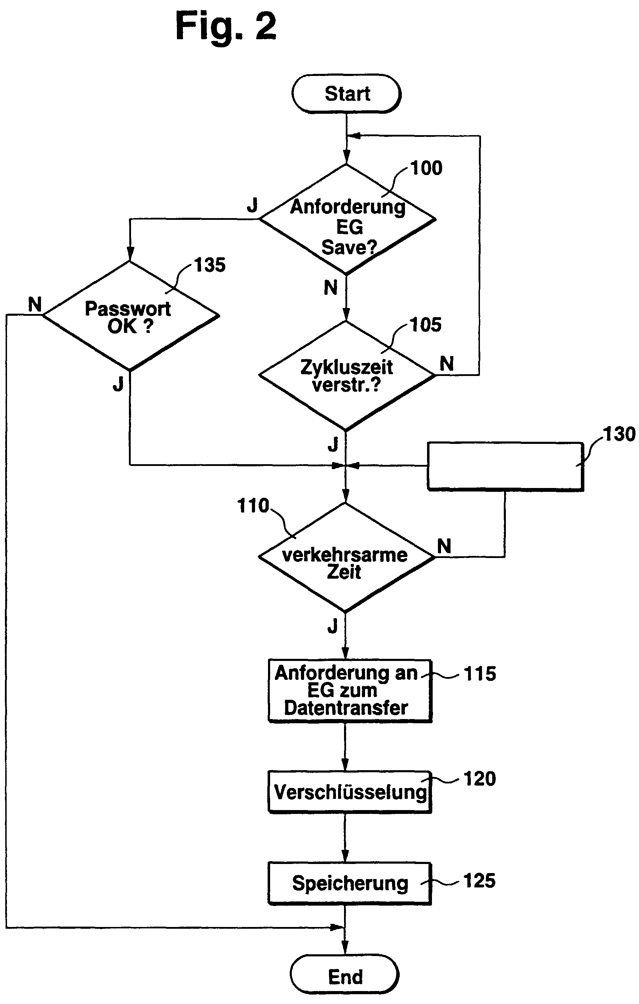

Die Steuerung der Speicherung der teilnehmerindividuellen Daten im Speicher 20 der Zentrale 15 und der Transfer der teilnehmerindividuellen Daten von der Zentrale 15 zu den Teilnehmerendgeräten 1, 5, 10 wird von der Steuerung 40 durchgeführt. Die Steuerung 40 kann dabei auch als extern an die Zentrale 15 angeschlossener Personalcomputer betrieben werden. Die Funktionsweise der Steuerung für die Speicherung der teilnehmerindividuellen Daten im Speicher 20 der Zentrale 15 ist anhand eines Ablaufplans gemäß Figur 2 dargestellt. Der Ablaufplan beschreibt dabei den Vorgang der Speicherung von teilnehmerindividuellen Daten eines der drei in Figur 1 dargestellten Telekommunikationsendgeräte 1, 5, 10. Dabei kann die Anforderung zur Abspeicherung teilnehmerindividueller Daten im Speicher 20 der Zentrale 15 vom entsprechenden Telekommuuikationsendgerät oder von der Zentrale 15 ausgehen. Die Zentrale 15 kann dazu beispielsweise die Telekommunikationsendgeräte 1, 5, 10 zu vorgegebenen Zeiten bzw. in vorgegebenen Zeitabständen zur Absendung teilnehmerindividueller Daten auffordern. Dazu können die Telekommunikationsendgeräte 1, 5, 10 periodisch und nacheinander zyklisch zur Absendung teilnehmerindividueller Daten von der Zentrale aufgefordert werden. Für die Beschreibung des erfindungsgemäßen Verfahrens gemäß dem Ablaufplan nach Figur 2 soll beispielhaft angenommen werden, daß teilnehmerindividuelle Daten des ersten Telekommunikationsendgerätes 1 zur Speicherung im Speicher 20 der Zentrale 15 vorgesehen sind.

Bei einem Programmpunkt 100 prüft die Steuerung 40, ob von dem ersten Telekommunikationsendgerät 1 in der Schnittstelle 45 ein Anforderungssignal zur Abspeicherung der teilnehmerindividuellen Daten im Speicher 20 der Zentrale 15 empfangen wurde. Ist dies der Fall, so wird zu einem Programmpunkt 135 verzweigt, andernfalls wird zu einem Programmpunkt 105 verzweigt. Bei Programmpunkt 105 prüft die Steuerung 40, ob ein vorgegebener Zeitabstand für die zyklische Aufforderung an das erste Telekommunikationsendgerät 1 zur Absendung der teilnehmerindividuellen Daten an die Zentrale 15 verstrichen ist. Ist dies der Fall, so wird zu einem Programmpunkt 110 verzweigt, andernfalls wird zu Programmpunkt 100 zurückverzweigt. Bei Programmpunkt 135 prüft die Steuerung 40, ob vom ersten Telekommunikationsendgerät 1 ein Zugangsberechtigungscode an die Zentrale 15 übertragen wurde und ob der in der Schnittstelle 45 empfangene Zugangsberechtigungscode mit im Speicher 20 der Zentrale 15 abgespeicherten Zugangsberechtigungsdaten übereinstimmt. Ist dies der Fall, so wird ein Benutzer des ersten Telekomuunikationsendgerätes 1 als berechtigt erkannt und zu Programmpunkt 110 verzweigt. Andernfalls wird der Benutzer des ersten Telekommunikationsendgerätes 1 als unberechtigt erkannt und der Programmteil verlassen. Der Zugangsberechtigungscode kann vom Benutzer am ersten Telekommunikationsendgerät 1 beispielsweise in Form eines Paßwortes und/oder mittels einer Zugangsberechtigungskarte, die in einen entsprechenden, in Figur 1 nicht dargestellten Kartenleser des ersten Telekommunikationsendgerätes 1 eingeführt wird, eingegeben werden. Bei Programmpunkt 110 prüft die Steuerung 40, ob eine verkehrsarme Zeit vorliegt, das heißt ob die Zentrale in vergleichsweise geringem Ausmaß mit höher priorisierten Datenverarbeitungsprozessen beschäftigt ist und/oder ob auf dem ersten Datenkanal 25 zwischen dem ersten Telekommunikationsendgerät 1 und der Zentrale 15 eine möglichst geringe Anzahl von Daten aktuell übertragen wird. Ist dies der Fall, so wird zu einem Programmpunkt 115 verzweigt, andernfalls wird zu einem Programmpunkt 130 verzweigt. Bei Programmpunkt 130 wird eine Warteschleife durchlaufen. Anschließend wird zu Programmpunkt 110 zurückverzweigt. Bei Programmpunkt 115 veranlaßt die Steuerung 40 die Schnittstelle 45 zur Absendung eines Aufforderungssignals an das erste Telekommunikationsendgerät 1. Dadurch wird das erste Telekommunikationsendgerät 1 zum Absenden der teilnehmerindividuellen Daten an die Zentrale 15 veranlaßt. Bei einem Programmpunkt 120 werden die in der Schnittstelle 45 empfangenen teilnehmerindividuellen Daten des ersten Telekommunikationsendgerätes 1 von der Steuerung 40 verschlüsselt. Bei einem Programmpunkt 125 werden die verschlüsselten teilnehmerindividuellen Daten im Speicher 20 der Zentrale 15 abgelegt. Anschließend wird der Programmteil verlassen.

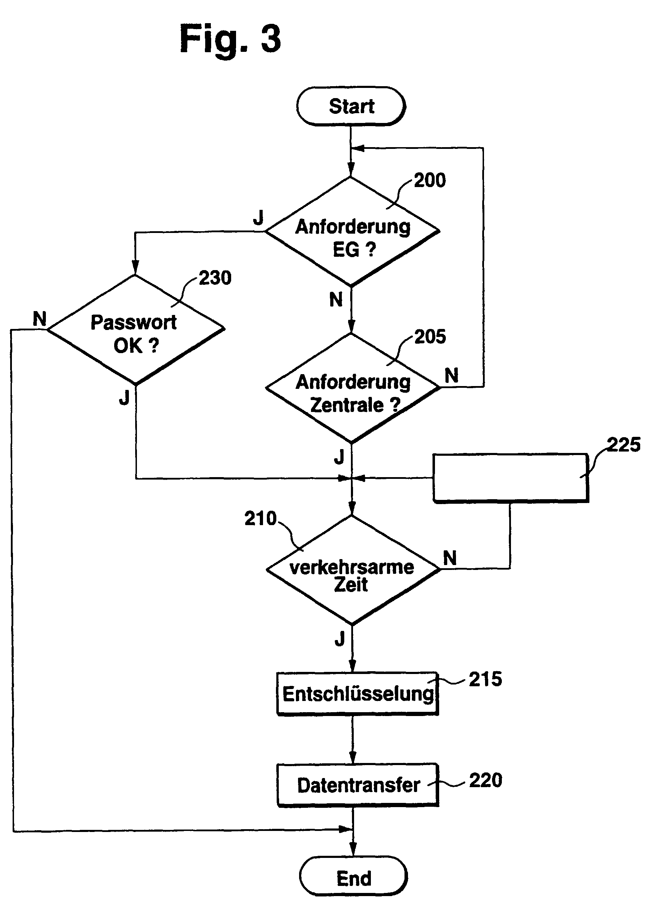

In Figur 3 ist ein Ablaufplan für die Steuerung 40 dargestellt, der den Ablauf bei der Übertragung von im Speicher 20 der Zentrale 15 gespeicherten teilnehmerindividuellen Daten an mindestens ein berechtigtes der drei in Figur 1 dargestellten Telekommunikationsendgeräte 1, 5, 10 beschreibt. Eine solche Übertragung teilnehmerindividueller Daten von der Zentrale 15 an mindestens eines der Telekommunikationsendgeräte 1, 5, 10 kann nach Betriebsstörungen mit Datenverlust im Speicher des jeweiligen Telekommunikationsendgerätes von Nutzen sein. Alternativ oder zusätzlich kann vorgesehen sein, daß die Zentrale 15 selbst die Übertragung teilnehmerindividueller Daten vom Speicher 20 der Zentrale 15 an mindestens ein berechtigtes der an die Zentrale 15 angeschlossenen Telekommunikationsendgeräte 1, 5, 10 veranlaßt.

Für den Ablauf gemäß Figur 3 soll beispielhaft die Übertragung teilnehmerindividueller Daten von der Zentrale 15 an das erste Telekommunikationsendgerät 1 beschrieben werden. Das schließt jedoch nicht aus, daß gleichzeitig teilnehmerindividuelle Daten von der Zentrale 15 an das zweite Telekommunikationsendgerät 5 und/oder an das dritte Telekommunikationsendgerät 10 übertragen werden.

Bei einem Programmpunkt 200 prüft die Steuerung 40, ob in der Schnittstelle 45 ein Anforderungssignal vom ersten Telekommunikationsendgerät 1 zur Übertragung teilnehmerindividueller Daten vom Speicher 20 der Zentrale 15 an das erste Telekommunikationsendgerät 1 empfangen wurde. Ist dies der Fall, so wird zu einem Programmpunkt 230 verzweigt, andernfalls wird zu einem Programmpunkt 205 verzweigt. Bei Programmpunkt 205 prüft die Steuerung 40, ob an der Zentrale 1, beispielsweise über eine in Figur 1 nicht dargestellte Eingabeeinheit ein Anforderungsbefehl zur Übertragung teilnehmerindividueller Daten von der Zentrale 15 an das erste Telekommunikationsendgerät 1 eingegeben wurde. Ist dies der Fall, so wird zu einem Programmpunkt 210 verzweigt, andernfalls wird zu Programmpunkt 200 zurückverzweigt. Bei Programmpunkt 230 prüft die Steuerung 40, ob in der Schnittstelle 45 ein Zugangsberechtigungscode vom ersten Telekommunikationsendgerät 1 empfangen wurde und ob dieser Zugangsberechtigungscode mit im Speicher 20 der Zentrale 15 gespeicherten Zugangsberechtigungsdaten übereinstimmt. Ist dies der Fall, so wird ein Benutzer des ersten Telekommunikationsendgerätes 1 als berechtigt erkannt und zu Programmpunkt 210 verzweigt. Andernfalls wird der Benutzer des ersten Telekommunikationsendgerätes 1 als unberechtigt erkannt und der Programmteil verlassen. Die Eingabe des Zugangsberechtigungscodes am ersten Telekommunikationsendgerät 1 erfolgt dabei wie auch an den beiden übrigen Telekommunikationsendgeräten 5, 10 in der bereits beschriebenen Weise mittels Paßworteingabe und/oder dem Einführen einer Zugangsberechtigungskarte. Bei Programmpunkt 210 prüft die Steuerung 40, ob eine verkehrsarme Zeit vorliegt, das heißt, ob die Zentrale in vergleichsweise geringem Ausmaß mit höher priorisierten Datenverarbeitugnsprozessen beschäftigt ist und/oder auf dem ersten Datenkanal 25 eine möglichst geringe Anzahl von Daten zwischen dem ersten Telekommunikationsendgerät 1 und der Schnittstelle 45 ausgetauscht wird. Ist dies der Fall, so wird zu einem Programmpunkt 215 verzweigt, andernfalls wird zu einem Programmpunkt 225 verzweigt. Bei Programmpunkt 225 wird eine Warteschleife durchlaufen. Anschließend wird zu Programmpunkt 210 zurückverzweigt. Bei Programmpunkt 215 lädt die Steuerung 40 die dem ersten Telekommunikationsendgerät 1 zugeordneten teilnehmerindividuellen Daten aus dem Speicher 20 und entschlüsselt sie. Bei einem Programmpunkt 220 veranlaßt die Steuerung 40 die Schnittstelle 45 zur Absendung der teilnehmerindividuellen Daten über den ersten Datenkanal 25 an das erste Telekommunikationsendgerät 1. Anschließend wird der Programmteil verlassen.

Wird bei Programmpunkt 205 an der Zentrale 15 eine Anforderung zur Übertragung teilnehmerindividueller Daten an das erste Telekommunikationsendgerät 1 eingegeben, so muß dabei zusätzlich auch eine Berechtigung beispielsweise durch Verwendung des Zugangsberechtigungscodes eingegeben und dieser Zugangsberechtigungscode von der Steuerung 40 überprüft werden. Nur bei von der Steuerung 40 erkannter Berechtigung kann dann zu Programmpunkt 210 weiterverzweigt werden. Andernfalls liegt keine Berechtigung vor und der Programmteil wird verlassen.

Sowohl bei der Speicherung teilnehmerindividueller Daten im Speicher 20 der Zentrale 15 als auch bei der Übertragung teilnehmerindividueller Daten von der Zentrale 15 an eines oder mehrere der Telekommunikationsendgeräte 1, 5, 10 ist es nicht unbedingt erforderlich, eine Datenübertragung der teilnehmerindividuellen Daten in verkehrsarmen Zeiten durchzuführen. Dementsprechend ist gegebenenfalls eine Verzögerung gleichzeitig stattfindender Nutzdatenübertragungen von Telekommunikationsverbindungen auf dem entsprechenden Datenkanal 25, 30, 35 aufgrund der für jeden Datenkanal begrenzten Datenrate in Kauf zu nehmen.

Im Speicher 20 der Zentrale 15 können, beispielsweise durch Eingabe an der in Figur 1 nicht dargestellten Eingabeeinheit der Zentrale 15 Daten abgespeichert werden, die nicht nur für eines der an die Zentrale 15 angeschlossenen Telekommunikationsendgeräte 1, 5, 10 teilnehmerindividuell sind. Sie können vorzugsweise gleichzeitig in der beschriebenen Weise von der Zentrale 15 an die entsprechenden Telekommunikationsendgeräte übertragen werden, sofern sie von berechtigten Benutzern bedient werden. So kann beispielsweise eine für alle drei Telekommunikationsendgeräte 1, 5, 10 gleichermaßen verwendbare Standardeinstellung beispielsweise für die Bedienoberfläche vom Speicher 20 der Zentrale 15 an die drei Telekommunikationsendgeräte 1, 5, 10 übertragen werden. Diese Standardeinstellung wird in den Telekommunikationsendgeräten 1, 5, 10 gespeichert. Die Standardeinstellung ist somit auch teilnehmerindividuell. Außerdem kann der jeweilige Benutzer aufbauend auf der Standardeinstellung Einstellungen verändern und im jeweiligen Telekommunikationsendgerät 1, 5, 10 abspeichern. Zusätzlich kann er gemäß dem in Figur 2 beschriebenen Ablaufplan die geänderte Einstellung im Speicher 20 der Zentrale 15 abspeichern lassen.

Genauso könnten im Speicher 20 der Zentrale 15 für alle an die Zentrale 15 angeschlossenen Telekommunikationsendgeräte 1, 5, 10 einheitliche Telefonbucheinträge gespeichert sein und an die drei Telekommunikationsendgeräte 1, 5, 10 übertragen werden. Die einheitlichen Telefonbucheinträge könnten dann in den drei Telekommunikationsendgeräten 1, 5, 10 jeweils gespeichert werden. Die einheitlichen Telefonbucheinträge könnten von den Benutzern der einzelnen Telekommunikationsendgeräte 1, 5, 10 individuell erweitert werden. Die auf diese Weise teilnehmerindividuell erweiterten Telefonbucheinträge könnten ebenfalls im jeweiligen Telekommunikationsendgerät 1, 5, 10 abgespeichert und gemäß dem in Figur 2 beschriebenen Ablaufplan im Speicher 20 der Zentrale 15 gesichert werden. Die für alle drei Telekommunikationsendgeräte 1, 5, 10 oder auch nur für einen Teil der drei Telekommunikationsendgeräte 1, 5, 10 gemeinsamen Standardeinstellungen und Telefonbucheinträge können entweder direkt über die in Figur 1 nicht dargestellte Eingabeeinneit der Zentrale 15 im Speicher 20 der Zentrale 15 abgelegt werden, wozu der Speicher 20 mit dieser Eingabeeinheit verbunden sein müßte, oder sie könnten an einem der Telekomuunikationsendgeräte 1, 5, 10 eingegeben oder programmiert und gemäß dem Ablaufplan nach Figur 2 an den Speicher 20 der Zentrale 15 zur Abspeicherung übertragen werden.

Damit die teilnehmerindividuellen Daten im Speicher 20 den entsprechenden Benutzern zugeordnet werden können, sind sie den ebenfalls im Speicher 20 der Zentrale 15 abgelegten entsprechenden Zugangsberechtigungsdaten zugeordnet. Diese Zugangsberechtigungsdaten müssen bei der Übertragung der teilnehmerindividuellen Daten von den Telekommunikationsendgeräten 1, 5, 10 an die Zentrale 15 beispielsweise in Form des Zugangsberechtigungscodes mitübertragen werden. Werden Anwendungen für mehrere Telekommunikationsendgeräte 1, 5, 10 unabhängig vom jeweiligen Benutzer abgespeichert, so kann dies ohne Zuordnung zu den Zugangsberechtigungsdaten erfolgen. Vor allem für den Fall, daß diese für mehrere Telekommunikationsendgeräte zugänglichen Daten nicht allen an die Zentrale 15 angeschlossenen Telekommunikationsendgeräten 1, 5, 10 zugänglich sein sollen, ist es sinnvoll, diese Daten dennoch den zugehörigen Zugangsberechtigungsdaten im Speicher 20 der Zentrale 15 zuzuordnen, so daß sie nur an die entsprechenden Telekommunikationsendgeräte übertragen werden können, deren Benutzer für diese Daten berechtigt sind. Die entsprechenden Zugangsberechtigungsdaten müssen dabei sowohl für den Fall mitgeliefert werden, daß die teilnehmerindividuellen Daten an einem Telekommunikationsendgerät eingegeben oder programmiert werden als auch für den Fall, daß die teilnehmerindividuellen Daten an der in Figur 1 nicht dargestellten Eingabeeinheit der Zentrale 15 eingegeben werden.

Auch ein neues Leistungsmerkmal kann auf die beschriebene Weise zumindest einem Teil der an die Zentrale 15 angeschlossenen Telekommunikationsendgeräte 1, 5, 10 durch Übertragung der entsprechenden Daten von der Zentrale 15 an die entsprechenden Telekommunikationsendgeräte zur Verfügung gestellt werden. Dieses Leistungsmerkmal braucht dann ebenfalls nur einmal entweder an einem an die Zentrale 15 angeschlossenen Telekommunikationsendgerät oder an der Zentrale 15 selbst eingegeben werden.

Eine Vorkonfigurierung mehrerer Telekommunikationsendgeräte 1, 5, 10 mit gleichen Standarddaten erfolgt somit ohne großen Aufwand. Aufbauend auf diesen gleichen Standarddaten können dann die jeweiligen Benutzer die teilnehmerindividuellen Einstellungen an den entsprechenden Telekommunikationsendgeräten 1, 5, 10 programmieren und auf die gemäß Figur 2 beschriebene Weise im Speicher 20 der Zentrale 15 abspeichern lassen.

Der Datenkanal 25, 30, 35 zur Übertragung der teilnehmerindividuellen Daten zwischen dem jeweiligen Telekommunikationsendgerät 1, 5, 10 und der Zentrale 15 kann beispielsweise als Signalisierungsdatenkanal, vorzugsweise als D-Kanal gemäß dem ISDN-Standard mit einer Datenrate von 16kBit/s, ausgebildet sein. Je nach Datenmenge kann zwischen einem Telekommunikationsendgerät und der Zentrale 15 auch mehr als ein Signalisierungsdatenkanal zur Übertragung der teilnehmerindividuellen Daten geschaltet werden. Bei Verwendung des D-Kanals zum Austausch der teilnehmerindividuellen Daten kann ein solcher Datenaustausch im D-Kanal-Protokoll angegeben werden, wobei hierfür in diesem Protokoll beispielsweise die PSF-Rubrik (Private specific facility) verwendet werden kann.

Der Datenkanal 25, 30, 35 zur Übertragung der teilnehmerindividuellen Daten zwischen einem der Telekommunikationsendgeräte 1, 5, 10 und der Zentrale 15 kann auch als Nutzdatenkanal, vorzugsweise als B-Kanal gemäß dem ISDN-Standard mit einer Datenrate von 64kBit/s ausgebildet sein. Je nach Datenmenge kann auch hier mehr als ein Nutzdatenkanal zur Übertragung der teilnehmerindividuellen Daten vorgesehen sein.

Die in Figur 1 nicht dargestellte Eingabeeinheit der Zentrale 15 kann bei Verwendung eines extern an die Zentrale 15 angeschlossenen Personal Computers auch an diesen angeschlossen sein.

## Patentansprüche

1. Verfahren zur Verwaltung teilnehmerindividueller Daten eines Telekommunikationsendgerätes (1, 5, 10), dadurch gekennzeichnet, daß die teilnehmerindividuellen Daten in einem Speicher (20) einer mit dem Telekommunikationsendgerät (1, 5, 10) verbundenen Zentrale (15) zum Anschluß mehrerer Telekommunikationsendgeräte (1, 5, 10), insbesondere einer Nebenstellenanlage, abgelegt werden und daß die teilnehmerindividuellen Daten nach einer Aufforderung vom Speicher (20) der Zentrale (15) an mindestens ein berechtigtes und an die Zentrale (15) angeschlossenes Telekommunikationsendgerät (1, 5, 10) übertragen werden.

2. Verfahren nach Anspruch 1, dadurch gekennzeichnet, daß teilnehmerindividuelle Daten vom Telekommunikationsendgerät (1, 5, 10) an die Zentrale (15) übertragen werden, wenn die Zentrale (15) das Telekommunikationsendgerät (1, 5, 10) als berechtigt erkannt hat.

3. Verfahren nach Anspruch 1 oder 2, dadurch gekennzeichnet, daß die Berechtigung eines Telekommunikationsendgerätes (1, 5, 10) anhand eines vom Telekommunikationsendgerät (1, 5, 10) an die Zentrale (15) übertragenen Zugangsberechtigungscodes geprüft wird.

4. Verfahren nach Anspruch 1, 2 oder 3, dadurch gekennzeichnet, daß die teilnehmerindividuellen Daten zwischen dem Telekommunikationsendgerät (1, 5, 10) und der Zentrale (15) zu einer vorgegebenen Zeit übertragen werden.

5. Verfahren nach einem der vorherigen Ansprüche, dadurch gekennzeichnet, daß die teilnehmerindividuellen Daten vom Telekommunikationsendgerät (1, 5, 10) in vorgegebenen Zeitabständen an die Zentrale (15) übertragen und dort im Speicher (20) abgelegt werden.

6. Verfahren nach einem der vorherigen Ansprüche, dadurch gekennzeichnet, daß die teilnehmerindividuellen Daten verschlüsselt im Speicher (20) der Zentrale (15) abgelegt werden und nur an ein berechtigtes Telekommunikationsendgerät (1, 5, 10) entschlüsselt übertragen werden.

7. Verfahren nach einem der vorherigen Ansprüche, dadurch gekennzeichnet, daß die Übertragung der teilnehmerindividuellen Daten vom Telekommunikationsendgerät (1, 5, 10) ausgelöst wird.

8. Verfahren nach einem der vorherigen Ansprüche, dadurch gekennzeichnet, daß die Übertragung der teilnehmerindividuellen Daten von der Zentrale (15) ausgelöst wird.

9. Verfahren nach einem der vorherigen Ansprüche, dadurch gekennzeichnet, daß die Übertragung der teilnehmerindividuellen Daten zwischen dem Telekommunikationsendgerät (1, 5, 10) und der Zentrale (15) in mindestens einem Signalisierungsdatenkanal, vorzugsweise einem D-Kanal gemäß dem ISDN-Standard (Integrated Services Data Network), übertragen werden.

10. Verfahren nach einem der vorherigen Ansprüche, dadurch gekennzeichnet, daß die Übertragung der teilnehmerindividuellen Daten zwischen dem Telekommunikationsendgerät (1, 5, 10) und der Zentrale (15) in mindestens einem Nutzdatenkanal, vorzugsweise einem B-Kanal gemäß dem ISDN-Standard, übertragen werden.
